# EUROPÄISCHE PATENTSCHRIFT

(11) **EP 4 060 272 B1**
(45) Veröffentlichungstag und Bekanntmachung des Hinweises auf die Patenterteilung: **02.08.2023**
(21) Anmeldenummer: 21163666.7
(22) Anmeldetag: 19.03.2021
(51) Int. Cl.: F28D 1/02, F28D 7/00, F28D 21/00, F28F 1/22, F28F 19/00, F28F 21/08, B21C 37/08, B23K 9/00, F22B 37/10, B21C 37/15, B23K 9/16, B23K 101/08, B23K 103/04, B23K 103/08

(54) **ROHR-/MEMBRANWAND ENTHALTEND LÄNGSNAHTGESCHWEISSTE ROHRE**
TUBE / MEMBRANE WALL COMPRISING LONGITUDINALLY WELDED TUBES
PAROI DE TUBE/MEMBRANE CONTENANT DES TUBES À SOUDURE LONGITUDINALE

(43) Veröffentlichungstag der Anmeldung: 21.09.2022
(73) Patentinhaber: Steinmüller Engineering GmbH, 51643 Gummersbach (DE)
(72) Erfinder: SCHADOW, Uwe, 51643 Gummersbach (DE); STREIB, Rolf, 46395 Bocholt (DE)
(74) Vertreter: Godemeyer Blum Lenze Patentanwälte Partnerschaft mbB - werkpatent

(56) Entgegenhaltungen:
- EP-A1- 2 551 050
- EP-A1- 2 695 694
- WO-A1-2008/113369
- US-A- 5 014 901
- US-A1- 2003 234 241

## Beschreibung

Die Erfindung betrifft eine Rohr-/Membranwand enthaltend eine Vielzahl von parallel zueinander angeordneten und gasdicht über Stege miteinander verbundenen Rohren.

Dampferzeugungskessel, wie sie typischerweise in Stromerzeugungsanlagen verwendet werden, sind im Allgemeinen große Stahl- oder Mauerwerkskonstruktionen, die Hunderte vertikal angeordneter Stahlrohre enthalten, die in thermischem Kontakt mit einem brennenden Brennstoff wie Kohle oder Abfall stehen. Dabei erwärmt sich das durch die Rohre zirkulierende Wasser. Das erwärmte Wasser oder der Dampf wird zum Antrieb von Turbinen verwendet, die Strom erzeugen. Die Rohre sind im Allgemeinen in großen Platten paralleler Rohre angeordnet, die mit Metallstegen verbunden sind, die kontinuierlich zwischen jedem Paar benachbarter Rohre in der Platte angeordnet sind, um eine Rohr-/Membranwand bzw. Rohrwand zu bilden. Die Rohre haben in der Regel einen Außendurchmesser von etwa 25 mm bis etwa 75 mm, mit einer Wandstärke, die bis zu etwa 13 mm reichen kann. Die Stege, die benachbarte Rohre miteinander verbinden, haben in der Regel eine Dicke, die ungefähr gleich der Wandstärke der Rohre ist, wobei die Breite der Metallstege meist im Bereich von etwa 6 mm bis etwa 40 mm liegt.

Die Verbrennung und thermische Behandlung von kommunalen und medizinischen Abfällen, von Klärschlamm und von Biomasse ist ein effektiver Weg zur Lösung der Abfallprobleme und leistet einen wichtigen Beitrag zur Energieerzeugung.

In Müllverbrennungsanlagen wird heißes Rauchgas, das bei der Verbrennung von Abfällen erzeugt wird, zur Erzeugung von Dampf durch Erhitzen von Speisewasser verwendet und dadurch Energie zurückgewonnen, indem der Dampf zum Antrieb von Turbinen oder für andere Energieprozesse wie die Kraft-Wärme-Kopplung verwendet wird. Die Wärmerückgewinnung der Wärmeleistung in dem während des Verbrennungsprozesses erzeugten Gas wird von Dampferzeugungskesseln durchgeführt, die üblicherweise eine Verbrennungskammer mit Membranwänden (d.h. Strahlungsverdampfern) sowie Verdampfern, Economizern und Überhitzern umfassen, die Wärme aus dem heißen Rauchgas als Energiequelle verwenden. Die Membranwände der Verbrennungskammer, in der die Verbrennung von Abfällen stattfindet, absorbieren auch die während der Verbrennung freigesetzte Wärme, und diese Wärme wird auch verwendet, um Speisewasser in Dampf zu verdampfen, der in den Überhitzer geleitet wird.

Allerdings beinhalten die Abfallströme eine Vielzahl von brennbaren Stoffen wie Paper, Kunststoffe, Holz, Biomasse und Industrieabfälle. Sie können reich an Chlor, Fluor und Schwefel sein und andere möglicherweise gefährliche chemische Verbindungen enthalten, welche bei der Verbrennung korrosive Gase, geschmolzene Salze und Asche bilden. In Dampferzeugern, die mit korrosiven Rauchgasen beaufschlagt werden, wie sie beispielsweise bei der Verbrennung von Hausmüll, Industrieabfällen, Biomasse aber auch von Klärschlamm entstehen, bilden sich Anbackungen und Ablagerungen an den Heizflächen. Diese schaffen häufig lokale Korrosionssysteme, die einen sehr schnellen Korrosionsangriff verursachen können, wobei die Hochtemperatur-Chlor-Korrosion und Salzschmelzkorrosion die wichtigsten sind.

Derzeit werden Kohlenstoffstähle und niedriglegierte (ferritische) Materialien zur Herstellung von nahtlos gefertigten Wärmetauscherrohren in Membranwänden oder Überhitzerrohren verwendet, wie z.B. 16Mo3 oder 13CrMo4-5. Diese Rohre werden mit einer Umhüllung bzw. Beschichtung aus einem hochlegierten Spezialstahl versehen werden, um das eigentliche Rohr zu schützen und Korrosionsprobleme in solchen Verbrennungsanlagen zu verringern. Hierbei wird z.B. durch Auftragschweißen eine 1 bis 2 mm starke Schicht aus einem Material, wie z.B. einer Nickelbasislegierung oder einem Werkstoff, der mit erheblichen Mengen an Chrom und Molybdän legiert ist, auf das zu schützende Rohr bzw. die Rohr-/Membranwand aufgebracht, um einen mit einem ununterbrochenen Metallüberzug auf der Rohr-/Membranwand zu bilden. Als Material für das Auftragschweißen werden derzeitig u.a. folgende Werkstoffe verwendet: Legierung 622 (Ni-22Cr-13Mo-W), Legierung 625 (Ni-22Cr-9Mo-3.5Nb) und Legierung 686 (Ni-21Cr-16Mo-4W). So beschreibt die US 5,014,901 Verfahren zum Auftragen einer Metallschutzschicht, beispielsweise aus Inconel 625, um Membranwände gegen Erosion und Korrosion zu schützen. Die Dokumente US 2003/0234241 A1, WO 2008/113369 A1, EP 2 695 694 A1 und EP 2 551 050 A1 offenbaren alle eine Rohr-/Membranwand enthaltend eine Vielzahl von parallel zueinander angeordneten und gasdicht über Stege miteinander verbundenen Röhren.

Die so beschichteten Membranwände weisen jedoch den Nachteil auf, dass diese eine raue Oberfläche aufweisen und Schlacke auf dieser Beschichtung haften bleibt. Diese Ablagerungen sind nachteilig für die Wärmeübertragung, und können aufgrund ihres Gewichts die Rohre bzw. die Rohr-/Membranwand beschädigen. Zur Vermeidung dieser Nachteile müssen die Ablagerungen entfernt werden, wodurch Ausfallzeiten für Reparaturen und Wartung entstehen. Außerdem ist die aufgeschweißte Schutzschicht aufgrund seiner inhomogenen Gefügestruktur korrosionsanfälliger als das verwendete homgenere Ausgangsmaterial für die Rohrfertigung.

Aufgabe der vorliegenden Erfindung war es daher, Ablagerungen und Anbackungen auf den Membranwänden von Dampferzeugern zur verringern oder zu vermeiden, und die Wartungsintervalle zu verlängern und die Korrosionsbeständigkeit zu verbessern. Weiterhin war es Aufgabe der Erfindung, das Auftragen von Metallschutzschichten zu vermeiden.

Die technische Aufgabe wird gelöst durch eine Rohr-/Membranwand enthaltend eine Vielzahl von parallel zueinander angeordneten und gasdicht über Stege miteinander verbundenen Rohren bzw. Verdampferrohren, wobei gemäß der Erfindung die Rohre längsnahtgeschweißt sind und aus lediglich einer einzigen Schicht einer Nickelbasislegierung oder eines Sonderedelstahls gefertigt sind, und dass die Stege aus einer Nickelbasislegierung oder aus einem Sonderedelstahl gefertigt sind. Damit werden die längsnahtgeschweißten Rohre und die Stege aus einem gleichwertigen Material oder sogar aus dem gleichen Material gefertigt.

Die Rohr-/Membranwand, die auch als Rohrwand aus Stegrohren bezeichnet werden kann, ist vorzugsweise so aufgebaut, dass jedes Rohr über einen Steg mit dem benachbarten Rohr verbunden ist. Auf diese Weise ist in der Rohr-/Membranwand auch ein jeweiliges Rohr von den benachbarten parallel verlaufenden Rohren durch jeweils einen Steg getrennt. Die längsnahtgeschweißten Rohre sind in der Rohr-/Membranwand miteinander gasdicht über Stege verbunden, was bedeutet, dass die Rohr-/Membranwand eine Barriere für Gase, beispielsweise für Rauchgase, bildet.

Die längsnahtgeschweißten Rohre aus der Nickelbasislegierungen oder Sonderedelstählen sind für die Verwendung in Membranwänden geeignet, und erfüllen die Anforderungen hinsichtlich hoher Korrosionsbeständigkeit, guter Warmbearbeitbarkeit, guter Zugfestigkeit und Strukturstabilität. Die aus diesen Metallen gefertigten Rohre und Stege der Membranwände benötigen keine äußere Beschichtung oder Auftragschweißbeschichtung mehr, da sie ausreichend korrosionsbeständig sind.

Gemäß der Erfindung sind die Rohre und die Stege und damit die Rohr-/Membranwand durchgehend jeweils aus einer Nickelbasislegierung oder aus einem Sonderedelstahl gefertigt, so dass die längsnahtgeschweißten Rohre und die Stege aus einem gleichwertigen Material oder aus dem gleichen Material gefertigt sind. Dies bedeutet, dass das Material aus dem die Rohre und Stege gefertigt sind, die Oberfläche der Rohr-/Membranwand (und damit auch der Rohre und Stege) darstellt. Der Begriff "Oberfläche" bezieht sich sowohl auf die den Rauchgasen ausgesetzte Vorderseite als auch auf die der Kesselwand zugewandten Rückseite der Rohr-/Membranwand. Somit weist die Rohr-/Membranwand keine weitere Beschichtung auf und die Oberfläche der Rohr-/Membranwand und damit die Oberfläche der darin verbauten Rohre und Stege ist direkt den Verbrennungsgasen ausgesetzt. Das Material der Rohre und Stege der Rohr-/Membranwand bedarf keinen weiteren Korrosionsschutz, wie etwa das für Membranwände und Überhitzerrohre üblicherweise verwendete Cladding, welches in der Regel eine durch Auftragschweißen aufgebrachte Metallbeschichtung darstellt. Somit ist die Oberfläche der Rohre und der Stege der Rohr-/Membranwand, d.h. die Oberfläche der Rohr-/Membranwand an sich glatt, was vorteilhafterweise eine geringere Anhaftung von Anbackungen zur Folge hat.

Die Rohr-/Membranwand der vorliegenden Erfindung ist lediglich von einer Seite den Rauchgasen und damit einer gewissen Korrosion über die Zeit ausgesetzt. Da, wie oben erläutert, die Oberfläche der erfindungsgemäßen Rohr-/Membranwand keine weiteren Schutzschichten bzw. kein Cladding aufweist, und wenn überhaupt nur geringe Anbackungen über die Zeit der Verwendung entstehen, kann die erfindungsgemäße Rohr-/Membranwand vorteilhafterweise nach einer gewissen Nutzungszeit aus dem Feuerraum bzw. Strahlungsraum ausgebaut und gedreht werden. So kann die bisherige den Rauchgasen nicht ausgesetzte Rückseite der Rohr-/Membranwand für eine zweite Verwendung zum Innenraum ausgerichtet werden und damit erstmals Rauchgasen ausgesetzt sein. Dadurch lässt sich die Gesamtlebenszeit der Rohr-/Membranwand mit einem geringen Aufwand verlängern, weil nach einer gewissen Zeit die bisherige Vorderseite aufgrund der einsetzenden Korrosion nicht mehr als solche eingesetzt werden kann, jedoch die Stabilität ausreicht, um als Rückseite zu dienen. Die bisher nicht angegriffene ehemalige Rückseite ist für einen zweiten Verwendungszyklus als den Rauchgasen ausgesetzte Seite (nun Vorderseite) verfügbar.

Diese Art der Wiederverwendung wäre bei dem bisher üblichen Korrosionsschutz, dem Cladding zwar auch theoretisch denkbar, jedoch unrentabel, da der Großteil der Gesamtkosten bei den bisher üblichen Membranwänden erst durch die Auftragschweißung (Cladding) generiert wird. Diese Auftragschweißung müsste im Falle einer Drehung wiederholt werden, womit der wirtschaftliche Vorteil entfiele. Im Falle der hier dargestellten neuen Erfindung, wäre die bisherige Rückseite der Membranwände dagegen ohne zusätzlichen Korrosionsschutz direkt einsatzbereit, wodurch sich der bereits beschriebene wirtschaftliche Vorteil der Erfindung leicht erklären lässt.

Somit weist die erfindungsgemäße Rohr-/Membranwand längsnahtgeschweißte Rohre auf, die als Wärmetauscherrohre oder Überhitzerrohre in Dampferzeugern als einschichtige Rohre bzw. Einzelschichtrohre ausgebildet sind. Dies bedeutet, dass die Nickelbasislegierung oder der Sonderedelstahl, aus dem die längsnahtgeschweißten Rohre und Stege der Rohr-/Membranwand gefertigt sind, direkt den Verbrennungsgasen ausgesetzt sind.

In einer bevorzugten Ausführungsform der Rohr-/Membranwand werden die längsnahtgeschweißten Rohre hergestellt unter Verwendung der Schritte:
i) Formen eines Rohlings bzw. Halbzeuges aus einer Nickelbasislegierung oder einem Sonderedelstahl zu einem flachen Walzband (Coil);
ii) Biegen des Walzbandes zu einem Rohr;
iii) Verschweißen der sich gegenüberstehenden Kanten des gebogenen Walzbandes oder Bandbleches ohne Schweißzusatzwerkstoffe, wobei ein längsnahtgeschweißtes Rohr ausgebildet wird; und
iv) Ausbildung einer Rohr-/Membranwand durch Zusammenfügen der Rohre über Stege mittels Schweißen mit oder ohne Zusatzschweißgut.

Somit weist in einer weiteren bevorzugten Ausführungsform der Rohr-/Membranwand das längsnahtgeschweißte Rohr eine Längsnaht auf, die ohne Schweißzusatzwerkstoffe geschweißt ist bzw. wurde oder mit Schweißmaterial geschweißt wurde, das aus einer gleichwertigen oder der gleichen Nickelbasislegierung bzw. Sonderedelstahl besteht wie das Material des zu schweißenden Rohrs. Dabei wird bei der Fertigung ein Schweißfaktor von 1,0 erzielt. Weiterhin weist in der bevorzugten Ausführungsform der Rohr-/Membranwand diese an der Verbindungsstelle zwischen Rohr und Steg eine Schweißnaht auf, die ohne Schweißzusatzwerkstoffe geschweißt ist bzw. wurde oder mit Schweißmaterial geschweißt wurde, das aus einem gleichwertigen oder der gleichen Nickelbasislegierung bzw. Sonderedelstahl besteht wie das Material des Rohrs und des Stegs, die miteinander verschweißt werden.

Die in dieser Erfindung verwendeten Legierungen weisen eine hervorragende Korrosionsbeständigkeit in verschiedenen hochkorrosiven Umgebungen auf. Da die Legierung zudem eine gute Warmbearbeitbarkeit, eine gute Zugfestigkeit und eine gute Strukturstabilität aufweist, sind die aus dieser Legierung gefertigten längsnahtgeschweißten Rohre sehr gut als Konstruktionsmaterial für Membranwände geeignet. Überraschenderweise haben die Erfinder gefunden, dass die längsnahtgeschweißten Rohre aus der hier verwendeten Legierung - anstelle von nahtlosen Rohren - als Rohre in Membranwänden für Dampferzeuger eingesetzt werden können und dabei alle technischen Anforderungen, die an Membranwände gestellt werden, sehr gut erfüllen.

Das Material der Nickelbasislegierungen oder der Sonderedelstähle stellt in dem in der Rohr-/Membranwand eingebauten Einzelschichtrohr die Innenseite und die Außenseite des Rohrs dar. Weiterhin stellt das Material der Nickelbasislegierungen oder der Sonderedelstähle das Material der Stege dar. Folglich stellen diese Materialien auch die Materialien der Außenseite der Rohr-/Membranwand dar. Somit weisen weder die Rohr-/Membranwand, noch die Rohre und Stege, aus dem die Rohr-/Membranwand gefertigt ist, eine äußere Beschichtung oder Auftragschweißbeschichtung auf. Das Material der Nickelbasislegierung oder Sonderedelstähle, aus dem die Rohre bzw. Stege gefertigt sind, ist daher direkt den korrosiven Verbrennungsgasen ausgesetzt, diesen gegenüber beständig und verringert die Wahrscheinlichkeit von Ablagerungen und Anbackungen, so dass die Wartungsintervalle für deren Entfernung wesentlich länger sind oder gar keine Wartungen hierfür mehr vorgenommen werden müssen.

Neben der Korrosionsbeständigkeit weisen diese erfindungsgemäß eingesetzten Nickelbasislegierungen oder Sonderedelstähle auch höhere Festigkeitswerte bei gleicher Materialtemperatur auf, so dass die benötigten Wandstärken für die längsnahtgeschweißten Rohre vorteilhafterweise geringer bemessen sein können als bei den derzeit eingesetzten Kohlenstoffstählen. So weist in einer bevorzugten Ausführungsform das längsnahtgeschweißte Rohr eine Wandstärke von 2,0 bis 5,0 mm, vorzugsweise von 2,0 bis 4,0 mm, besonders bevorzugt von 2,0 bis 3,0 mm auf.

In einer weiteren besonders bevorzugten Ausführungsform weist das längsnahtgeschweißte Rohr einen Außendurchmesser von 20,0 mm bis 80,0 mm auf.

In einer weiteren besonders bevorzugten Ausführungsform weisen die Stege, die benachbarte Rohre miteinander verbinden, eine Dicke bzw. Stärke von 2 mm bis 6 mm und eine Breite von 20 mm bis 40 mm auf.

In einer weiteren bevorzugten Ausführungsform ist in der Rohr-/Membranwand die Längsnaht der längsnahtgeschweißten Rohre nicht im Bereich der Stegverbindung platziert.

Weiterhin ist bevorzugt, dass die Nickelbasislegierung oder der Sonderedelstahl in Gewichts-% folgende Zusammensetzung aufweist:
mindestens 18,0 % Cr, vorzugsweise 20,0 % bis 32,0 % Cr,
6,0 bis 20,0 % Mo,
0,5 % bis 40,0 % Fe,
und den Rest Ni, vorzugsweise 25,0 bis 65,0 % Ni,
wobei Bestandteile von insgesamt kleiner 10,0 Gew.-% an Al, Nb, W, Mn, Si, Ti, Co, Cu, C, N und Spurenelemente enthalten sein können.

In einer weiteren besonders bevorzugten Ausführungsform weist die Nickelbasislegierung oder der Sonderedelstahl in Gewichts-% auf:
20,0 bis 28,0 % Cr,
6,0 bis 12,0 % Mo,
3,0 % bis 35,0 % Fe,
und den Rest Ni, vorzugsweise 30,0 bis 70 % Ni,
wobei Bestandteile von insgesamt kleiner 10,0 Gew.-% an Al, Nb, W, Mn, Si, Ti, Co, Cu, C, N und Spurenelemente enthalten sein können.

Besonders bevorzugt weist die Nickelbasislegierung oder der Sonderedelstahl in Gewichts-% auf:
20,0 bis 28,0 % Cr,
6,0 bis 12,0 % Mo,
3,0 % bis 35,0 % Fe,
1,5 bis 4,5 % Nb,
nicht mehr als 0,4 % Al,
und den Rest Ni, vorzugsweise 30,0 bis 70 % Ni,
wobei Bestandteile von insgesamt kleiner 10,0 Gew.-% an W, Mn, Si, Ti, Co, Cu, C, N und Spurenelemente enthalten sein können.

In einer weiteren ganz besonders bevorzugten Ausführungsform ist die Nickelbasislegierung oder der Sonderedelstahl im Wesentlichen in Gewichts-% zusammengesetzt aus:
nicht mehr als 0,1 % C,
20,0 bis 28,0 % Cr,
6,0 bis 12,0 % Mo,
nicht mehr als 4,5 % Nb,
nicht mehr als 0,4 % Al,
nicht mehr als 1,0 % Co,
nicht mehr als 1,5 % Cu,
3,0 % bis 35,0 Fe,
nicht mehr als 0,5 % Si,
nicht mehr als 0,4 % Ti,
nicht mehr als 4,0 % Mn,
optional nicht mehr als 0,01 % B,
optional nicht mehr als 0,05 % P,
optional nicht mehr als 0,01 % S,
optional nicht mehr als 0,01 % Mg,
optional nicht mehr als 0,01 % Ca,
optional nicht mehr als 0,02 % O,
optional nicht mehr als 0,3 % N,
optional nicht mehr als 0,1 % Seltene-Erdelemente, und
den Rest Ni und unvermeidbaren Verunreinigungen.

Weiterhin ist einer bevorzugten Ausführungsform die Nickelbasislegierung oder der Sonderedelstahl im Wesentlichen in Gewichts-% zusammengesetzt aus
(Alloy 625; 2.4856)
nicht mehr als 0,1 % C,
20,0 bis 28,0 % Cr,
8,0 bis 12,0 % Mo,
1,5 bis 4,5 % Nb,
nicht mehr als 0,4 % Al,
nicht mehr als 1,0 % Co,
nicht mehr als 10,0 % Fe, vorzugsweise nicht mehr als 5,0 % Fe,
nicht mehr als 0,5 % Si,
nicht mehr als 0,4 % Ti,
nicht mehr als 0,5 % Mn,
optional nicht mehr als 0,01 % B,
optional nicht mehr als 0,05 % P,
optional nicht mehr als 0,01 % S,
optional nicht mehr als 0,01 % Mg,
optional nicht mehr als 0,01 % Ca,
optional nicht mehr als 0,02 % O,
optional nicht mehr als 0,1 % Seltene-Erdelemente, und
den Rest Ni und unvermeidbaren Verunreinigungen.

In einer alternativen bevorzugten Ausführungsform ist die Nickelbasislegierung oder der Sonderedelstahl im Wesentlichen in Gewichts-% zusammengesetzt aus
(Alloy 31 plus; 2.4692)
nicht mehr als 0,1 % C,
20,0 bis 28,0 % Cr,
6,0 bis 12,0 % Mo,
nicht mehr als 0,4 % Al,
nicht mehr als 1,5 % Cu,
24,0 % bis 35,0 % Fe,
nicht mehr als 0,5 % Si,
nicht mehr als 4,0 % Mn,
optional nicht mehr als 0,01 % B,
optional nicht mehr als 0,05 % P,
optional nicht mehr als 0,01 % S,
optional nicht mehr als 0,01 % Mg,
optional nicht mehr als 0,01 % Ca,
optional nicht mehr als 0,02 % O,
optional nicht mehr als 0,3 % N,
optional nicht mehr als 0,1 % Seltene-Erdelemente, und
den Rest Ni und unvermeidbaren Verunreinigungen.

Die Auswirkungen der Legierungsbestandteile und die Gründe für die Festlegung der Gehalte der einzelnen Elemente hinsichtlich der für die Erfindung notwendigen Eigenschaften der erfindungsgemäße Rohr-/Membranwand sowie der darin verbauten längsnahtgeschweißten Rohre und Stege sind wie folgt:

### C (Kohlenstoff):

Wenn der C-Gehalt zu hoch ist, verbindet er sich mit Cr, wobei Chromcarbid gebildet wird. Dadurch wird die Legierung korrosionsempfindlich. Daher ist der Gehalt an C vorzugsweise auf bis 0,1 Gew.-%, weiter bevorzugt auf bis 0,05 Gew.-% beschränkt. Weiter bevorzugt ist es, den C-Gehalt zu minimieren bis zu einer Menge, die im industriellen Raffinationsverfahren wirtschaftlich erreichbar ist.

### Si (Silizium):

Si ist als Desoxidationsmittel wirksam. Ein Si-Gehalt von mehr als 0,5 Gew.-% bewirkt, dass die Legierung bei hohen Temperaturen spröde wird. Daher ist der Si-Gehalt vorzugsweise auf bis 0,5 Gew.-% beschränkt.

### Mn (Mangan):

Mn wirkt als Desoxidationsmittel. Allerdings reduziert ein Mn-Gehalt von mehr als 0,5 Gew.-% die Warmbearbeitbarkeit der Legierung. Daher ist der Mn-Gehalt vorzugsweise auf bis zu 4,0 Gew.-%, weiter bevorzugt auf bis zu 2,0 Gew.-% und noch weiter bevorzugt auf bis zu 0,5 Gew.-% beschränkt.

### Cr (Chrom):

Cr ist eines der wesentlichen Elemente zur Verbesserung der Korrosions- und Oxidationsbeständigkeit der Legierung. Dieser Effekt ist ab einem Cr-Gehalt von 20,0 Gew.-% signifikant und daher ist dieser Mindestgehalt bevorzugt. Bei hohen Cr-Gehalten wird jedoch die plastische Umformbarkeit der Legierung beeinträchtigt. Daher beträgt der Cr-Gehalt bevorzugt mindestens 20,0 Gew.-% und weiter bevorzugt 20,0 bis 28,0 Gew.-%.

### Mo (Molybdän):

Mo verbessert die Beständigkeit gegen Lochfraßkorrosion und Kontaktkorrosion in Chlorionen-haltigen Umgebungen und die Widerstandsfähigkeit gegenüber verschiedenen Säurelösungen und Chlorid-haltigen Salzschmelzen. Diese Wirkungen von Mo treten insbesondere bei Gehalten von 6,0 bis 12,0 Gew.-% auf, so dass bevorzugte Mo-Gehalte von 6,0 bis 12,0 Gew.-% liegen.

### Al (Aluminium):

Al wirkt als ein Desoxidationsmittel des Stahls. Al muss nicht notwendigerweise in der Legierung vorhanden sein. Vorzugsweise ist in der Legierung mehr als 0,1 Gew.-% Al für die ausreichende desoxidierende Wirkung enthalten. Wenn der Al-Gehalt mehr als 0,4 Gew-% beträgt, kann die Kriechfestigkeit und die Zähigkeit verringert sein. Daher ist der Al-Inhalt vorzugsweise auf bis zu 0,4 Gew.-% beschränkt.

### Fe (Eisen):

Fe verbessert die Warmbearbeitbarkeit und verhindert die Hochtemperaturversprödung. Der enthält die Legierung vorzugsweise 3,0 bis 35,0 Gew.-% Fe. Daher wurde in einer bevorzugten Ausführungsform der Gehalt an Fe auf 24,0 Gew.-% bis 35,0 Gew.-% bestimmt.

Andererseits beeinträchtigt ein hoher Fe-Gehalt die gute Korrosionsbeständigkeit der Legierung, da der höhere Fe-Gehalt mit einem niedrigeren Gehalt an Ni einhergeht. Daher wurde in einer alternativen bevorzugten Ausführungsform die Obergrenze des Fe-Gehalts auf 10,0 Gew.-%, weiter bevorzugt auf bis 5,0 Gew.-% bestimmt.

Im Falle von Nb-haltigen Nickelbasislegierungen verhindert Fe die Hochtemperaturversprödung dieser Legierung, wenn Produkte aus dieser Legierung über einen langen Zeitraum erhöhten Temperaturen ausgesetzt ist. In einer Ausführungsform der in dieser Erfindung verwendeten Legierung kann der Nb-Gehalt vorzugsweise bis zu 4,5 Gew.-% betragen, um die Korrosionsbeständigkeit zu verbessern. Durch Zugabe von Fe kann die durch den hohen Nb-Gehalt bedingte Verringerung der Warmbearbeitbarkeit und die Beständigkeit gegenüber der Hochtemperaturversprödung erreicht werden.

### Nb (Niob):

Nb hat eine Wirkung C aufgrund der Bildung von Carbid zu fixieren, um die Ausfällung von Chromkarbid zu verhindern und dadurch die Beständigkeit gegen interkristalline Korrosion der Legierung zu verbessern. Auf der anderen Seite verringert Nb die Bearbeitbarkeit und Strukturstabilität der Legierung.

Legierungen, die mehr als 0,5 Gew.-% Nb enthalten weisen eine deutlich verbesserte Korrosionsbeständigkeit auf. Daher beträgt der Nb-Gehalt in einer Ausführungsform vorzugsweise bis 4,5 Gew.-%, weiter bevorzugt 1,5 Gew.-% bis 4,5 Gew.-%. Nb enthält Ta, das von Nb wegen der technischen Schwierigkeit der Raffination nicht vollständig von Nb getrennt werden kann. Daher bedeutet Nb "Nb + Ta" in dieser Anmeldung.

Auf der anderen Seite verschlechtern höhere Mengen an Nb die Warm- und Kaltbearbeitbarkeit der Legierung und machen diese gegenüber der Hochtemperaturversprödung empfindlich. Eine solche nachteilige Wirkung von Nb kann durch Fe gemildert werden. Daher ist in einer alternativen bevorzugten Ausführungsform kein Nb in der Legierung enthalten, oder nur als unvermeidbare Verunreinigung.

### P (Phosphor):

P ist eine unvermeidbare Verunreinigung, die aus den zur Herstellung verwendeten Rohstoffen stammt und die Bearbeitbarkeit der Legierung beeinträchtigt. Die Warmbearbeitbarkeit der Legierung wird signifikant verbessert, wenn der P-Gehalt vorzugsweise nicht mehr als 0,05 Gew.-%, weiter bevorzugt nicht mehr als 0,01 Gew.-% beträgt.

### Ca (Calcium) und Mg (Magnesium):

Obwohl diese Elemente für die hier verwendete Legierung nicht notwendig sind, können sie zugegeben werden, wenn eine besonders gute Warmbearbeitbarkeit der Legierung erforderlich ist. Allerdings bilden mehr als 0,01% Ca oder Mg intermetallische Verbindungen mit niedrigem Schmelzpunkt, die die Warmbearbeitbarkeit verschlechtern. Wenn Ca und/oder Mg zugegeben wird, um die Warmbearbeitbarkeit zu verbessern, ist es bevorzugt, dass der Gehalt an jeder oder insgesamt nicht weniger als 0,003% beträgt.

### Seltene-Erdelemente:

Obwohl Seltene-Erdelemente wie Y, La und Ce entbehrliche Elemente sind, können sie gegebenenfalls hinzugefügt werden, um die Warmbearbeitbarkeit zu verbessern. Wenn jedoch der Gehalt mehr als 0,1 Gew.-% beträgt, nimmt die Warmverarbeitbarkeit aufgrund der Bildung von intermetallischen Verbindungen mit Ni, Cr, Mo usw. ab.

### B (Bor):

B verbessert die Beständigkeit gegen die Hochtemperatur-Kriechverformung. Der bevorzugte Bereich des Gehalts an B beträgt bis 0,01 Gew.-%. Höhere B-Gehalte sind nachteilig, da B Verbindungen mit niedrigem Schmelzpunkt, wie NiB, bildet, die die Warmbearbeitbarkeit der Legierung verringern.

### Ti

Ti ist in der Nickelbasislegierung vorzugsweise bis zu einem Gehalt von 0,4 Gew.-% enthalten. Ti wird verwendet, um N als TiN-Präzipitate zu fixieren, da N Cr2N bildet, das die Korrosionsbeständigkeit der Legierung verringert.

Die Erfindung stellt weiterhin eine Kesselwand bereit enthaltend die erfindungsgemäße Rohr-/Membranwand, wobei die Rohre und die Stege der Rohr-/Membranwand keine weitere Beschichtung aufweisen und die Oberfläche der Rohre und der Stege der Rohr-/Membranwand direkt den Verbrennungsgasen ausgesetzt ist. Dies bedeutet, dass das Material oder die Materialien, aus dem die Rohre und Stege der Rohr-/Membranwand gefertigt sind, die genannte Oberfläche darstellt bzw. darstellen, die direkt den Verbrennungsgasen ausgesetzt ist. Damit ist das Material der Oberfläche identisch mit dem Material, aus dem die Rohre und Stege und damit auch die Rohr-/Membranwand gefertigt sind.

Die Erfindung stellt zudem einen Dampferzeuger mit einem Feuerraum und/oder Strahlungsraum bereit, der mindestens eine erfindungsgemäße Rohr-/Membranwand aufweist, wobei die Rohre und die Stege der Rohr-/Membranwand keine weitere Beschichtung aufweisen und die Oberfläche der Rohre und der Stege der Rohr-/Membranwand direkt den Verbrennungsgasen ausgesetzt ist. Dies bedeutet, dass das Material oder die Materialien, aus dem die Rohre und Stege der Rohr-/Membranwand gefertigt sind, die genannte Oberfläche darstellt bzw. darstellen, die direkt den Verbrennungsgasen ausgesetzt ist.

Weiterhin betrifft die Erfindung die Verwendung der erfindungsgemäßen Rohr-/Membranwand in einem Dampferzeuger oder die Verwendung des erfindungsgemäßen Dampferzeugers zur Erzeugung von Dampf oder überhitztem Dampf, wobei die Oberfläche der Rohre und der Stege der Rohr-/Membranwand direkt den Verbrennungsgasen ausgesetzt ist. Das Ausgesetzt sein bedeutet, dass die Verbrennungsgase an der Rohr-/Membranwand und den in dieser enthaltenen längsnahtgeschweißten Rohren und Stegen vorbeiströmen und die Wärme an diese abgeben. Dabei nimmt das in den Rohren strömende Wärmetauscherfluid die Wärme auf und transportiert sie zur weiteren Nutzung ab. Wie oben erläutert stellt das Material oder stellen die Materialien, aus dem die Rohre und Stege der Rohr-/Membranwand gefertigt sind, die genannte Oberfläche dar, die direkt den Verbrennungsgasen ausgesetzt ist.

In einer bevorzugten Verwendung stammen die Verbrennungsgase aus der Verbrennung von Brennstoffen ausgewählt aus der Gruppe bestehend aus Hausmüll, Industrieabfällen, Biomasse und Klärschlamm. Aufgrund dieser Brennstoffe sind die betreffenden Verbrennungsgase reich an Halogenverbindungen, insbesondere reich an Chlorverbindungen, und/oder an Schwefelverbindungen. In einer weiteren bevorzugten Verwendung weisen die Verbrennungsgase eine Halogen-Konzentration von mindestens 200 mg/Nm³, vorzugsweise von mindestens 500 mg/Nm³ auf.

Zum Vergleich: Bei der Verbrennung von fossilen Brennstoffen, wie etwa Steinkohle und Braunkohle, liegen die SO₂-Werte im Rauchgas in der Regel bei 1.000-10.000 mg/Nm³ SO₂. ("Nm³": Normkubikmeter). Die Werte für HCl liegen bei 5 bis 100 mg/Nm³ HCl. Fluor und Brom usw. sind in der Regel nur in Spuren vorhanden.

Bei der Verbrennung von Hausmüll, Industrieabfällen, Biomasse, und Klärschlamm sind die Werte deutlich höher. Die SO₂-Konzentration liegt in der Regel zwischen 500 und 8.000 mg/Nm³. Die Konzentrationen an Halogen-Verbindungen in den Verbrennungsgasen liegen hier in einem Bereich von 300 und 8.000 mg/Nm³. Dabei können Brom und Fluor in deutlich höheren Konzentrationen auftreten.

Daher sind die Materialien, die den aus der Verbrennung von Brennstoffen wie Hausmüll, Industrieabfällen, Biomasse und Klärschlamm stammenden Verbrennungsgasen ausgesetzt sind, deutlich mehr gefordert und unterliegen einer weitaus höheren Korrosion als in der Kohleverbrennung.

Daher weisen in einer bevorzugten Verwendung die Verbrennungsgase eine Halogen-Konzentration von mindestens 200 mg/Nm³, vorzugsweise von mindestens 500 mg/Nm³ auf.

Weiterhin ist bevorzugt, dass die Verbrennungsgase eine Temperatur von 400°C bis 1500°C aufweisen, d.h. die Verbrennungsgase treffen mit diesen Temperaturen auf die Rohr-/Membranwand und die darin enthaltenen längsnahtgeschweißten Rohre.

Zudem ist weiterhin bevorzugt, dass die Verbrennungsgase einen Feuchtegehalt von mindestens 15 %, vorzugsweise von mindestens 20 % und weiter bevorzugt von mindestens 25 % aufweisen.

Die oben beschriebene Rohr-/Membranwand mit den darin enthaltenen längsnahtgeschweißten Rohre und die diese Rohre verbindenden Stege, die diesen aggressiven Verbrennungsgasen ausgesetzt sind, sind in besonderer Weise geeignet, die durch diese Verbrennungsgase gestellten Anforderungen zu genügen.

Wie oben bereits erläutert, ist die Rohr-/Membranwand aus längsnahtgeschweißten Rohren und Stegen gefertigt, wobei die Rohre lediglich aus einer einzigen Schicht einer Nickelbasislegierung oder aus einer einzigen Schicht eines Sonderedelstahls gefertigt sind, und wobei die Stege aus einem gleichwertigen, d.h. ebenfalls aus einer Nickelbasislegierung oder aus einem Sonderedelstahl, oder aus dem gleichem Material bzw. aus der gleichen Legierung gefertigt sind. Somit sind die in der Rohr-/Membranwand enthaltenen längsnahtgeschweißten Rohre als einschichtige Rohre bzw. als Einzelschichtrohre ausgebildet. Diese einzelne Schicht besteht aus der genannten Nickelbasislegierung oder dem genannten Sonderedelstahl. Daraus ergibt sich, dass die längsnahtgeschweißten Rohre, die Stege und damit auch die Rohr-/Membranwand kein Cladding bzw. keine Auftragschweißbeschichtung aufweisen bzw. aufweist. Dies bedeutet, dass die Nickelbasislegierung oder der Sonderedelstahl, aus dem die (einzige Schicht der) längsnahtgeschweißten Rohre gefertigt ist, direkt den Verbrennungsgasen ausgesetzt sind.

Die Erfindung stellt weiterhin ein Verfahren bereit zur Erzeugung von Dampf oder überhitztem Dampf in Dampferzeugern enthaltend die erfindungsgemäße Rohr-/Membranwand, wobei die Oberfläche der Rohre und der Stege der Rohr-/Membranwand direkt den Verbrennungsgasen ausgesetzt sind. Damit stellt das Material oder stellen die Materialien, aus dem die Rohre und Stege der Rohr-/Membranwand gefertigt sind, die genannte Oberfläche dar, die direkt den Verbrennungsgasen ausgesetzt ist.

In einem bevorzugten Verfahren stammen die Verbrennungsgase aus der Verbrennung von Brennstoffen ausgewählt aus der Gruppe bestehend aus Hausmüll, Industrieabfällen, Biomasse und Klärschlamm. Wie oben erläutert, sind die Verbrennungsgase reich an Halogenverbindungen, insbesondere an Chlorverbindungen. Weiterhin können die Verbrennungsgase reich an Schwefelverbindungen sein.

So weisen in einem bevorzugten Verfahren die Verbrennungsgase eine Halogen-Konzentration von mindestens 200 mg/Nm³, vorzugsweise von mindestens 500 mg/Nm³ auf.

Weiterhin ist bevorzugt, dass die Verbrennungsgase mit einer Temperatur von 400°C bis 1500°C auf die Oberfläche der Rohre und der Stege der Rohr-/Membranwand treffen, d.h. die Rohr-/Membranwand bzw. die Rohre und die Stege der Rohr-/Membranwand sind Verbrennungsgasen mit einer Temperatur im Bereich von 400°C bis 1500°C ausgesetzt.

In einem weiteren bevorzugten Verfahren weisen die Verbrennungsgase einen Feuchtegehalt von mindestens 15 %, vorzugsweise von mindestens 20 % und weiter bevorzugt von mindestens 25 % auf.

Weiterhin ist bevorzugt, dass der durch die längsnahtgeschweißten Rohre der Rohr-/Membranwand strömende Dampf bzw. überhitzte Dampf einen Druck von mindestens 40,0 bar aufweist. Insbesondere ist bevorzugt, dass das durch die längsnahtgeschweißten Rohre der Rohr-/Membranwand strömende Medium bzw. Fluid, d.h. vorzugsweise Wasser, Dampf bzw. überhitzter Dampf, eine Temperatur von 200°C bis 600°C, vorzugsweise von 250°C bis 450°C aufweist.

In einer besonders bevorzugten Verwendung bzw. einem besonders bevorzugten Verfahren wird die Rohr-/Membranwand nach einem ersten Nutzungszeitraum aus dem Feuerraum bzw. Strahlungsraum ausgebaut, gewendet und wieder eingebaut, wobei die im ersten Nutzungszeitraum den Rauchgasen nicht ausgesetzte Seite (bisherige Rückseite) der Rohr-/Membranwand für eine zweite Verwendungszeit den Rauchgasen ausgesetzt ist. Damit wird die im ersten Nutzungszeitraum den Rauchgasen ausgesetzte Seite (bisherige Vorderseite) der Rohr-/Membranwand für eine zweite Verwendungszeit nicht mehr den Rauchgasen ausgesetzt.

Die Erfindung betrifft auch ein Verfahren zur Herstellung eines Rohrs einer Rohr-/Membranwand und einer Rohr-/Membranwand eines Dampferzeugers, hergestellt aus der oben genannten Nickelbasislegierung, umfassend die Schritte:
i) Formen eines Rohlings bzw. Halbzeuges aus einer Nickelbasislegierung oder einem Sonderedelstahl zu einem flachen Walzband (Coil);
ii) Biegen des Walzbandes zu einem Rohr;
iii) Verschweißen der sich gegenüberstehenden Kanten des gebogenen Walzbandes oder Bandbleches ohne Schweißzusatzwerkstoffe, wobei ein längsnahtgeschweißtes Rohr ausgebildet wird; und
iv) Ausbildung einer Rohr-/Membranwand durch Zusammenfügen der Rohre über Stege mittels Schweißen mit oder ohne Zusatzschweißgut.

Der Schritt i) umfasst vorzugsweise das Unterwerfen des Rohlings bzw. des Halbzeugs einer plastischen Bearbeitung von mindestens einer der Warmbearbeitung und Kaltbearbeitung, wobei ein Blech, d.h. ein Walzblech ausgeformt wird, das den Abmessungen des herzustellenden Rohrs entspricht.

Die Nickelbasislegierungen oder die Sonderedelstähle, die in der vorliegenden Erfindung verwendet werden, können in dem herkömmlichen industriellen Verfahren und den Apparaten hergestellt werden. Beispielsweise werden nach dem Schmelzen von Materialien wie Ni, Cr, Fe usw. in einem Lichtbogenofen oder einem Hochfrequenz-Induktionsofen eine Desoxidation und Einstellung der chemischen Zusammensetzung, Barren oder Brammen in dem Barrenbildungsprozess oder dem Stranggießverfahren hergestellt.

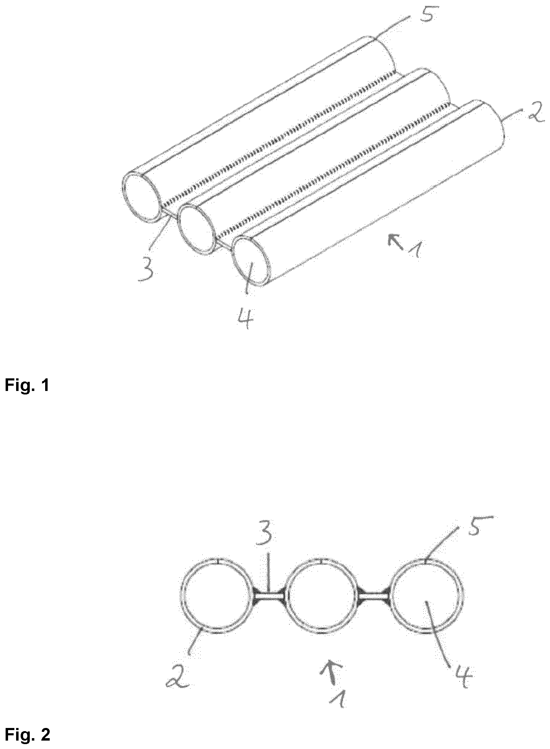

**Fig. 1** zeigt schematisch eine Ansicht einer Rohr-/Membranwand. Die Figur zeigt eine Rohr-/Membranwand **1** mit einer parallelen Anordnung von längsnahtgeschweißten Rohren **2** mit einem Innenraum **4** für das zu erhitzende Fluid, wobei die längsnahtgeschweißten Rohre **2** über Stege **3** gasdicht miteinander verbunden sind, um die Rohr-/Membranwand **1** auszubilden. Die Längsnaht **5** der betreffenden Rohre **2** ist nicht an der Verbindungsstelle zwischen Rohr **2** und Steg **3** positioniert.

**Fig. 2** zeigt einen Querschnitt einer Rohr-/Membranwand. Die Figur zeigt eine Rohr-/Membranwand **1** mit längsnahtgeschweißten Rohren **2** mit einem Innenraum **4,** wobei die Rohre **2** über Stege **3** gasdicht miteinander verbunden sind, um die Rohr-/Membranwand **1** auszubilden. Auch hier ist zu erkennen, dass die Längsnähte **5** der betreffenden Rohre **2** nicht an der Verbindungsstelle zwischen Rohr **2** und Steg **3** positioniert sind.

Die Erfindung wird in den folgenden Beispielen näher erläutert.

### Beispiele

Beispiele für geeignete Materialen zur Herstellung der längsnahtgeschweißten Rohre und Stege, die in die Rohr-/Membranwand eingearbeitet werden, sind korrosionsbeständige Nickelbasis-Werkstoffe wie etwa 2.4856 (Legierung 625) oder 2.4692 (Legierung 31 Plus).

### Beispiel 1: Herstellung der Rohr-/Membranwand

Legierungen mit den in Tabelle 1 und 2 gezeigten chemischen Zusammensetzungen wurden in einem Vakuumschmelzofen geschmolzen und in Barren gegossen. Nach dem Abziehen wurden die Barren bei einer Temperatur von 200°C für 5 Stunden erhitzt und in einem Temperaturbereich zwischen 1.200°C und 1.050°C in zu einem flachen Walzband geschmiedet.

Das Walzband wurde weiter bis zu einer Stärke von 2,4 mm gewalzt, zu einem Rohr gebogen. Die sich gegenüberstehenden Kanten des gebogenen Blechs bzw. Walzbandes wurden ohne Schweißzusatzwerkstoffe mittels Lichtbogenschweißen unter Schutzgas-Atmosphäre gemäß den folgenden Normen verschweißt, wobei ein längsnahtgeschweißtes Rohr erzeugt wurde: EN ISO 15609-1:2005-01 (WPS) (Anforderung und Qualifizierung von Schweißverfahren für metallische Werkstoffe - Schweißanweisung - Teil 1: Lichtbogenschweißen [ISO 15609-1:2004]), EN ISO 15614-1:2017-12 (WPQR) (Anforderung und Qualifizierung von Schweißverfahren für metallische Werkstoffe - Schweißverfahrensprüfung - Teil 1: Lichtbogen- und Gasschweißen von Stählen und Lichtbogenschweißen von Nickel und Nickellegierungen [ISO 15614-1:2017]) und EN ISO 13920:1996:11 (Schweißen - Allgemeintoleranzen für Schweißkonstruktionen - Längen - und Winkelmaße; Form und Lage [ISO 13920:1996]).

Anschließend wurde die Schweißnaht geglättet. Die erhaltenen längsnahtverschweißten Rohre bestanden aus einer einzigen Schicht des Metallwerkstoffes und es wurden keinerlei Beschichtungen aufgebracht.

Schließlich wurden die erhaltenen längsnahtgeschweißten Rohre mit Stegen (Breite: 20 mm; Stärke 4 mm) miteinander verschweißt und eine Rohr-/Membranwand mit parallel zueinander angeordneten längsnahtgeschweißten Rohren, die jeweils mit einem Steg miteinander verbunden sind, erhalten. Die Herstellung der Rohre und die Verbindung der Rohre mit dem Steg erfolgen in zwei nacheinander folgenden Herstellungsschritten, vorzugsweise jeweils automatisiert.

In den Tabellen 1 und 2 werden die verwendeten Legierungen für das längsnahtverschweißte Rohr und die Stege näher definiert.

**Tabelle 1:**

| | **Ni** | **Cr** | **Fe** | **C** | **Mn** | **Si** | **Co** | **AI** | **Ti** | **P** | **S** | **Mo** | **Nb** |
|---|---|---|---|---|---|---|---|---|---|---|---|---|---|
| min. | Rest | 21,0 | | | | | | | | | | 8,0 | 3,2 |
| max. | | 23,0 | 5,0 | 0,03 | 0,5 | 0,4 | 1,0 | 0,4 | 0,4 | 0,01 | 0,01 | 10,0 | 3,8 |

**Tabelle 2:**

| | **Ni** | **Cr** | **Fe** | **C** | **Mn** | **Si** | **Cu** | **AI** | **P** | **S** | **N** | **Mo** |
|---|---|---|---|---|---|---|---|---|---|---|---|---|
| min. | 33,5 | 26,0 | Rest | | 1,0 | | 0,5 | | | | 0,1 | 6,0 |
| max. | 35,0 | 27,0 | | 0,01 | 4,0 | 0,1 | 1,5 | 0,3 | 0,02 | 0,01 | 0,25 | 7,0 |

### Beispiel 2: Untersuchungen auf Korrosionsbeständigkeit

Die in Beispiel 1 gefertigten längsnahtgeschweißten Rohre wurden in einem Dampferzeuger einer Abfallverbrennungsanlage eingebaut und angeschlossen. Somit wäre die Rohr-/Membranwand enthaltend die längsnahtgeschweißten Rohre entsprechend den Verbrennungsgasen ausgesetzt. Mehrere Messungen der Verbrennungsgase ergaben eine Halogen-Konzentration von 350 bis 850 mg/Nm³, einen Feuchtegehalt von 18% bis 28 % und eine Temperatur von 700°C bis 1000°C. Die Temperatur des Dampfes, der in den längsnahtgeschweißten Rohren strömte, betrug 250°C bis 450°C.

### Ergebnis

Nachdem die längsnahtgeschweißten Rohre den Verbrennungsgasen fünf Monate ausgesetzt waren, wurden diese auf Korrosion hin überprüft. Es wurde gefunden, dass die Rohre eine hervorragende Korrosionsbeständigkeit aufwiesen und keinerlei Probleme bzgl. der Schweißnaht auftraten.

Da die verwendeten Legierungen eine hohe Korrosionsbeständigkeit und zudem eine gute Warmbearbeitbarkeit, eine gute Zugfestigkeit und eine gute Strukturstabilität aufweisen, sind die aus den genannten Legierungen gefertigten längsnahtgeschweißten Rohre sehr gut als Konstruktionsmaterial für Membranwände geeignet. Weiterhin haben die Erfinder gefunden, dass längsnahtgeschweißte Rohre aus der hier verwendeten Legierung anstatt von nahtlosen Rohren als Bestandteil von Membranwänden in Dampferzeugern eingesetzt werden können und dabei alle Anforderungen sehr gut erfüllen können.

## Patentansprüche

1. Eine Rohr-/Membranwand enthaltend eine Vielzahl von parallel zueinander angeordneten und gasdicht über Stege miteinander verbundenen Rohren, **dadurch gekennzeichnet, dass** die Rohre längsnahtgeschweißt sind und aus lediglich einer einzigen Schicht einer Nickelbasislegierung oder eines Sonderedelstahls gefertigt sind, und dass die Stege aus einer Nickelbasislegierung oder aus einem Sonderedelstahl gefertigt sind.

2. Die Rohr-/Membranwand gemäß Anspruch 1, **dadurch gekennzeichnet, dass** jedes Rohr über einen Steg mit dem benachbarten Rohr verbunden ist.

3. Die Rohr-/Membranwand gemäß Anspruch 1, **dadurch gekennzeichnet, dass** die Rohre und die Stege keine weitere Beschichtung aufweisen und die Oberfläche der Rohre und der Stege direkt den Verbrennungsgasen ausgesetzt ist.

4. Die Rohr-/Membranwand gemäß irgendeinem der Ansprüche 1 bis 3, **dadurch gekennzeichnet, dass** die längsnahtgeschweißten Rohre eine Wandstärke von 2,0 bis 5,0 mm, vorzugsweise von 2,0 bis 4,0 mm, besonders bevorzugt von 2,0 bis 3,0 mm aufweisen.

5. Die Rohr-/Membranwand gemäß irgendeinem der Ansprüche 1 bis 4, **dadurch gekennzeichnet, dass** die längsnahtgeschweißten Rohre einen Außendurchmesser von 20,0 mm bis 80,0 mm aufweisen.

6. Die Rohr-/Membranwand gemäß irgendeinem der Ansprüche 1 bis 5, **dadurch gekennzeichnet, dass** die Nickelbasislegierung oder der Sonderedelstahl in Gewichts-% folgende Zusammensetzung aufweist:
mindestens 18,0 % Cr, vorzugsweise 20,0 % bis 32,0 % Cr,
6,0 bis 20,0 % Mo,
0,5 % bis 40,0 % Fe,
und den Rest Ni, vorzugsweise 25,0 bis 65,0 % Ni,
wobei Bestandteile von insgesamt kleiner 10,0 Gew.-% an Al, Nb, W, Mn, Si, Ti, Co, Cu, C, N und Spurenelemente enthalten sein können.

7. Eine Kesselwand enthaltend die Rohr-/Membranwand gemäß irgendeinem der Ansprüche 1 bis 6, wobei die Rohre und die Stege der Rohr-/Membranwand keine weitere Beschichtung aufweisen und die Oberfläche der Rohre und der Stege der Rohr-/Membranwand direkt den Verbrennungsgasen ausgesetzt ist.

8. Ein Dampferzeuger mit einem Feuerraum und/oder Strahlungsraum, der mindestens eine Rohr-/Membranwand gemäß irgendeinem der Ansprüche 1 bis 6 aufweist, wobei die Rohre und die Stege der Rohr-/Membranwand keine weitere Beschichtung aufweisen und die Oberfläche der Rohre und der Stege der Rohr-/Membranwand direkt den Verbrennungsgasen ausgesetzt ist.

9. Verwendung der mindestens einen Rohr-/Membranwand gemäß irgendeinem der Ansprüche 1 bis 6 in einem Dampferzeuger oder Verwendung des Dampferzeugers gemäß Anspruch 8 zur Erzeugung von Dampf oder überhitztem Dampf, wobei die Oberfläche der Rohre und der Stege der Rohr-/Membranwand direkt den Verbrennungsgasen ausgesetzt ist.

10. Ein Verfahren zur Erzeugung von Dampf oder überhitztem Dampf in Dampferzeugern gemäß Anspruch 8, wobei die Oberfläche der Rohre und der Stege der Rohr-/Membranwand direkt den Verbrennungsgasen ausgesetzt ist.

11. Das Verfahren gemäß Anspruch 10, **dadurch gekennzeichnet, dass** die Verbrennungsgase aus der Verbrennung von Brennstoffen ausgewählt aus der Gruppe bestehend aus Hausmüll, Industrieabfällen, Biomasse und Klärschlamm stammen.

12. Das Verfahren gemäß Anspruch 10 oder 11, **dadurch gekennzeichnet, dass** die Verbrennungsgase eine Halogen-Konzentration von mindestens 200 mg/Nm³, vorzugsweise von mindestens 500 mg/Nm³ aufweisen.

13. Das Verfahren gemäß irgendeinem der Ansprüche 10 bis 12, **dadurch gekennzeichnet, dass** die Verbrennungsgase einen Feuchtegehalt von mindestens 15 %, vorzugsweise von mindestens 20 % und weiter bevorzugt von mindestens 25 % aufweisen.

14. Das Verfahren gemäß irgendeinem der Ansprüche 10 bis 13, **dadurch gekennzeichnet, dass** die Verbrennungsgase mit einer Temperatur von 400°C bis 1500°C auf die Oberfläche der Rohre und der Stege der Rohr-/Membranwand treffen.

15. Das Verfahren gemäß irgendeinem der Ansprüche 10 bis 14, **dadurch gekennzeichnet, dass** das in den längsnahtgeschweißten Rohren der Rohr-/Membranwand strömende Medium, vorzugsweise Wasser bzw. Dampf bzw. überhitzter Dampf, eine Temperatur von 200°C bis 600°C, vorzugsweise von 250°C bis 450°C aufweist.

16. Das Verfahren gemäß irgendeinem der Ansprüche 10 bis 15, **dadurch gekennzeichnet, dass** das durch die längsnahtgeschweißten Rohre der Rohr-/Membranwand strömende Medium, vorzugsweise Wasser bzw. Dampf bzw. überhitzter Dampf, einen Druck von mindestens 40,0 bar aufweist.

17. Die Verwendung gemäß Anspruch 9 oder das Verfahren gemäß irgendeinem der Ansprüche 10 bis 16, wobei die Rohr-/Membranwand nach einem ersten Nutzungszeitraum in dem Feuerraum bzw. Strahlungsraum gewendet installiert wird, wobei die im ersten Nutzungszeitraum den Rauchgasen nicht ausgesetzte Seite der Rohr-/Membranwand für eine zweite Verwendungszeit den Rauchgasen ausgesetzt ist.

## Claims

1. A tube/membrane wall comprising a plurality of tubes arranged parallel to one another and connected to one another in a gas-tight manner via fins, **characterized in that** the tubes are longitudinally welded and are made from only a single layer of a nickel-based alloy or a special stainless steel, and **in that** the fins are made from a nickel-based alloy or are made of special stainless steel.

2. The tube/membrane wall according to claim 1, **characterized in that** each tube is connected to the adjacent tube by a fin.

3. The tube/membrane wall according to claim 1, **characterized in that** the tubes and the fins have no further coating and the surface of the tubes and the fins is directly exposed to the combustion gases.

4. The tube/membrane wall according to any one of claims 1 to 3, **characterized in that** the longitudinally welded tubes have a wall thickness of 2.0 to 5.0 mm, preferably from 2.0 to 4.0 mm, particularly preferably from 2.0 to 3.0 mm.

5. The tube/membrane wall according to any one of claims 1 to 4, **characterized in that** the longitudinally welded tubes have an outer diameter of 20.0 mm to 80.0 mm.

6. The tube/membrane wall according to any one of claims 1 to 5, **characterized in that** the nickel-based alloy or the special stainless steel has the following composition in % by weight:
at least 18.0% Cr, preferably 20.0% to 32.0% Cr,
6.0 to 20.0% Mo,
0.5 % to 40.0% Fe,
and the balance is Ni, preferably 25.0 to 65.0% Ni,
wherein it may comprise components of less than 10.0% by weight in total of Al, Nb, W, Mn, Si, Ti, Co, Cu, C, N and trace elements.

7. A boiler wall comprising the tube/membrane wall according to any one of claims 1 to 6, wherein the tubes and fins of the tube/membrane wall have no further coating and the surface of the tubes and fins of the tube/membrane wall is directly exposed to the combustion gases.

8. A steam generator with a combustion chamber and/or radiation chamber, comprising at least one tube/membrane wall according to any one of claims 1 to 6, wherein the tubes and the fins of the tube/membrane wall have no further coating and the surface of the tubes and the fins of the tube/membrane wall is directly exposed to the combustion gases.

9. Use of the at least one tube/membrane wall according to any one of claims 1 to 6 in a steam generator or use of the steam generator according to claim 8 for generating steam or superheated steam, wherein the surface of the tubes and the fins of the tube/membrane wall is directly exposed to the combustion gases.

10. A method of generating steam or superheated steam in steam generators according to claim 8, wherein the surface of the tubes and the fins of the tube/membrane wall is directly exposed to the combustion gases.

11. The method according to claim 10, **characterized in that** the combustion gases originate from the combustion of fuels selected from the group consisting of municipal waste, industrial waste, biomass and sewage sludge.

12. The method according to claim 10 or 11, **characterized in that** the combustion gases have a halogen concentration of at least 200 mg/Nm³, preferably at least 500 mg/Nm³.

13. The method according to any one of claims 10 to 12, **characterized in that** the combustion gases have a moisture content of at least 15%, preferably at least 20% and more preferably at least 25%.

14. The method according to any one of claims 10 to 13, **characterized in that** the combustion gases impinge on the surface of the tubes and the fins of the tube/membrane wall at a temperature of 400°C to 1500°C.

15. The method according to any one of claims 10 to 14, **characterized in that** the medium flowing in the longitudinally welded tubes of the tube/membrane wall, preferably water or steam or superheated steam, has a temperature of 200°C to 600°C, preferably 250°C to 450°C.

16. The method according to any one of claims 10 to 15, **characterized in that** the medium flowing through the longitudinally welded tubes of the tube/membrane wall, preferably water or steam or superheated steam has a pressure of at least 40.0 bar.

17. The use according to claim 9 or the method according to any one of claims 10 to 16, wherein the tube/membrane wall after a first period of use in the furnace or in the radiation chamber is installed inverted, with the side of the tube/membrane wall not exposed to the flue gases during the first period of use being exposed to the flue gases for a second period of use.

## Revendications

1. Paroi de tube/de membrane contenant une pluralité de tubes agencés parallèlement les uns aux autres et reliés de manière étanche au gaz par le biais de nervures entre eux, **caractérisée en ce que** les tubes sont soudés par cordon longitudinal et sont fabriqués juste en une seule couche d'un alliage à base de nickel ou d'un acier spécial, et que les nervures sont fabriquées en un alliage à base de nickel ou en un acier spécial.

2. Paroi de tube/de membrane selon la revendication 1, **caractérisée en ce que** chaque tube est relié par le biais d'une nervure au tube contigu.

3. Paroi de tube/de membrane selon la revendication 1, **caractérisée en ce que** les tubes et les nervures ne présentent aucun autre revêtement et la surface des tubes et des nervures est directement exposée aux gaz de combustion.

4. Paroi de tube/de membrane selon l'une quelconque des revendications 1 à 3, **caractérisée en ce que** les tubes soudés par cordon longitudinal présentent une épaisseur de paroi de 2,0 à 5,0 mm, de préférence de 2,0 à 4,0 mm, le plus préférentiellement de 2,0 à 3,0 mm.

5. Paroi de tube/de membrane selon l'une quelconque des revendications 1 à 4, **caractérisée en ce que** les tubes soudés par cordon longitudinal présentent un diamètre extérieur de 20,0 mm à 80,0 mm.

6. Paroi de tube/de membrane selon l'une quelconque des revendications 1 à 5, **caractérisée en ce que** l'alliage à base de nickel ou l'acier spécial présente en % en poids la composition suivante :
au moins 18,0 % de Cr, de préférence 20,0 % à 32,0 % de Cr,
6,0 à 20,0 % de Mo,
0,5 % à 40,0 % de Fe,
et le reste de Ni, de préférence 25,0 à 65,0 % de Ni,
dans laquelle des constituants inférieurs dans l'ensemble à 10,0 % en poids de Al, Nb, W, Mn, Si, Ti, Co, Cu, C, N et d'oligo-éléments peuvent être contenus.

7. Paroi de chaudière contenant la paroi de tube/de membrane selon l'une quelconque des revendications 1 à 6, dans laquelle les tubes et les nervures de la paroi de tube/de membrane ne présentent aucun autre revêtement et la surface des tubes et des nervures de la paroi de tube/de membrane est directement exposée aux gaz de combustion.

8. Générateur de vapeur avec un espace de combustion et/ou espace de rayonnement qui présente au moins une paroi de tube/de membrane selon l'une quelconque des revendications 1 à 6, dans lequel les tubes et les nervures de la paroi de tube/de membrane ne présentent aucun autre revêtement et la surface des tubes et des nervures de la paroi de tubes/de membrane est directement exposée aux gaz de combustion.

9. Utilisation d'au moins une paroi de tube/de membrane selon l'une quelconque des revendications 1 à 6 dans un générateur de vapeur ou utilisation du générateur de vapeur selon la revendication 8 pour la génération de vapeur ou de vapeur surchauffée, dans laquelle la surface des tubes et des nervures de la paroi de tube/de membrane est directement exposée aux gaz de combustion.

10. Procédé de génération de vapeur ou de vapeur surchauffée dans des générateurs de vapeur selon la revendication 8, dans lequel la surface des tubes et des nervures de la paroi de tube/de membrane est directement exposée aux gaz de combustion.

11. Procédé selon la revendication 10, **caractérisé en ce que** les gaz de combustion proviennent de la combustion de combustibles sélectionnés à partir du groupe constitué de déchets ménagers, déchets industriels, biomasse et boue.

12. Procédé selon la revendication 10 ou 11, **caractérisé en ce que** les gaz de combustion présentent une concentration en halogène d'au moins 200 mg/Nm³, de préférence d'au moins 500 mg/Nm³.

13. Procédé selon l'une quelconque des revendications 10 à 12, **caractérisé en ce que** les gaz de combustion présentent une teneur en humidité d'au moins 15 %, de préférence d'au moins 20 % et de manière encore préférée d'au moins 25 %.

14. Procédé selon l'une quelconque des revendications 10 à 13, **caractérisé en ce que** les gaz de combustion avec une température de 400 °C à 1 500 °C rencontrent la surface des tubes et des nervures de la paroi de tube/de membrane.

15. Procédé selon l'une quelconque des revendications 10 à 14, **caractérisé en ce que** le milieu s'écoulant dans les tubes soudés par cordon longitudinal de la paroi de tube/de membrane, de préférence de l'eau ou de la vapeur ou de la vapeur surchauffée, présente une température de 200°C à 600°C, de préférence de 250 °C à 450 °C.

16. Procédé selon l'une quelconque des revendications 10 à 15, **caractérisé en ce que** le milieu s'écoulant à travers les tubes soudés par cordon longitudinal de la paroi de tube/de membrane, de préférence de l'eau ou de la vapeur ou de la vapeur surchauffée, présente une pression d'au moins 40,0 bars.

17. Utilisation selon la revendication 9 ou procédé selon l'une quelconque des revendications 10 à 16, dans laquelle/lequel la paroi de tube/de membrane est installée tournée après une première période d'utilisation dans l'espace de combustion ou l'espace de rayonnement, dans laquelle/lequel le côté non exposé dans la première période d'utilisation aux gaz de fumées de la paroi de tube/de membrane est exposé pour un second temps d'utilisation aux gaz de fumées.
